Europäisches Patentamt

(19) European Patent Office

Office européen des brevets

(11) Publication number: **0 225 779**
**A2**

(12) # EUROPEAN PATENT APPLICATION

(21) Application number: **86309390.2**

(22) Date of filing: **02.12.86**

(51) Int. Cl.⁴: **G 01 N 30/20**
**G 01 N 30/24**

(30) Priority: **02.12.85 GB 8529682**

(43) Date of publication of application:
**16.06.87 Bulletin 87/25**

(84) Designated Contracting States:
**AT BE CH DE ES FR GB GR IT LI LU NL SE**

(71) Applicant: **DOW CHEMICAL (NEDERLAND) B.V.**
**Herbert H. Dowweg 4 P.O. Box 48**
**NL-4530 AA Terneuzen (NL)**

(72) Inventor: **Noten, Laurentius Godefridus**
**Spuikompark 17**
**Philippine (NL)**

**Oomens, Antonius Cornelis Maria**
**Spuikompark 22**
**Philippine (NL)**

(74) Representative: **Raynor, John et al**
**W.H. Beck, Greener & Co 7 Stone Buildings Lincoln's Inn**
**London WC2A 3SZ (GB)**

(54) **Injection device and liquid sample analyser.**

(57) An injection device for a fluid sample analysis apparatus such as a gas chromatograph, comprises a sample space (4) for containing a fluid sample, an inlet port (5) for supplying a fluid sample to the sample space, an outlet port (l8) for passing the sample from the sample space to the analysis apparatus, and a valve member (2) having at least first and second positions such that in the first position the sample space (4) communicates with the inlet port (l5) and is isolated from the outlet port (l8), and in the second position the sample space communicates with the outlet port, and is isolated from the inlet port.

A gas under pressure is supplied to the sample space (4) in the second position of the valve to cause the said gas under pressure to enter the sample space to sweep the sample from the sample space to the outlet port. Gas flow through the outlet port (18) is prevented in the first position of the valve.

FIG.1

EP 0 225 779 A2

**Description**

INJECTION DEVICE AND LIQUID SAMPLE ANALYSER

This invention relates to an injection device for use with liquid sample analysis apparatus, and to a method of operating a sample analysis device. In particular, the invention relates to an injection device for gas chromatography. Gas chromatography (GC) is one of the most widely used routine analysis techniques in various chemical processes, and is applicable to a very wide range of sample types. Sample injection in early GC machines was generally effected by means of a syringe, inserted through a septum, in a heated sample introduction zone. Many GC machines still function in this way.

In more recent times, automated injection valves have been developed in which a process liquid is caused to flow continuously through a sample space in the sampling valve, and when sampling is to take place, the sample space is isolated from the continuous flow of sample, and made to communicate with an outlet port. Simultaneously, a flow of carrier gas is passed through the sample space, to flush the sample from the sample space into the analysis apparatus. A review of sampling devices of this kind is contained, for example in "Gas Analysis Instrumentation" (A. Verdin, Macmillan Press Limited 1973).

A major difficulty with existing valves of this type arises because of the time taken by the carrier gas to sweep the sample from the sample space. This gives rise to peak tailing, and consequent loss of sensitivity of the analysis. Manual injection methods do not suffer to such a great extent from this difficulty, but, when the syringe injection method is used, any volatile components contained in the liquid sample will very often volatilize from the sample in the time between aspiration of the sample into the syringe, and injection through the septum of the analysis apparatus.

In an article by M. Beche, Y. Claret and D. Coutagne, (Analusis, 1980, Volume 8, No. I, Pages 3I to 34), there is described an injection device for gas chromatography, in which a sample is injected from a slider-type valve into a gas chromatograph, by means of a high-pressure gas. Although this device has a number of advantages in comparison with existing injection methods, there are still problems associated with it. First, in the device disclosed in the above article, the carrier gas for the gas chromatograph is routed through injection valve, and therefore the gas handling for an existing chromatograph has to be changed substantially, to enable the device to be used.

Secondly, because the carrier gas is routed through the injection device, the flow of carrier gas is interrupted, whilst the injection process takes place. This results in increased peak tailing, and therefore descreased sensitivity, for certain substances.

In accordance with the present invention, an injection valve is provided which enables the high pressure injection of a sample into a gas chromatograph, or similar device, which is capable of being utilised with little or no disruption to the existing gas handling arrangements.

In accordance with a first aspect of the invention, there is provided an injection device for a fluid sample analysis apparatus, comprising:

means defining a sample space for containing fluid sample, for example a liquid sample,

an inlet port for supplying a fluid sample to the sample space,

an outlet port for passing the sample from the sample space to the analysis apparatus,

a valve member having at least first and second positions such that in the first position the sample space communicates with the inlet port and is isolated from the outlet port, and in the second position the sample space communicates with the outlet port, and is isolated from the inlet port,

means for supplying a gas under pressure to the sample space in the second position of the valve to cause the said gas under pressure to enter the sample space to sweep the sample from the sample space to the outlet port, and means for preventing gas flow through the outlet port in the first position of the valve.

In the injection device in accordance with the invention, there is no gas flow through the outlet port, when the valve is in the first position (the sampling position). Carrier gas flow to the analysis apparatus (e.g. the GC machine) is therefore independent of the injection device, and is not interrupted when injection takes place.

In accordance with a second aspect of the invention, there is provided apparatus for analysing a fluid sample, for example a liquid sample, comprising means defining a sample introduction zone and a sample analysis zone, means for introducing a flow of an inert carrier gas into the sample introduction zone, to convey a sample from the sample introduction zone to the analysis zone, an injection device for injecting the sample into the sample introduction zone, the injection device including means defining a sample space, and means for causing the sample space to communicate with the sample introduction zone, whilst simultaneously causing the application to the sample space of a flow of gas, at a pressure substantially higher than that of the said carrier gas, characterised in that the inert carrier gas is introduced into the column independently of the injection device.

The injection device preferably comprises a pneumatically operable valve member, preferably operated by the same gas as is supplied to the sample space. This gas may be air, but may preferably be nigrogen or helium. The gas under pressure utilized to operate the pneumatic valve member will generally be at a pressure substantially higher than that of the carrier gas used in the analysis apparatus, for example at least one bar higher than the pressure of the carrier gas, preferably at least four bar higher.

The means defining the sample space preferably comprises a slider having a passageway therein defining the sample space. The slider is adapted to move between a first position, in which the passageway communicates with the inlet port, and a second position, in which the passageway communicates with the outlet port. The device may incorporate a pneumatic chamber, including a pneumatically operable member, for example, a diaphragm, or piston, connected to the valve member. A control valve may supply the gas under pressure alternately to either side of the pneumatically operable member, one side of the chamber being provided with a passageway to supply the pressurized gas to a port on the valve, such that, when the gas under pressure is supplied to activate the device and to bring the sample space in communication with the outlet port, the gas is simultaneously applied to the sample space, to exhaust the sample therefrom.

An outlet conduit, preferably of a low thermal conductivity material, for example polytetrafluoroethylene may be connected between the outlet port and through the septum of the analysis apparatus, (generally a conventional GC machine).

The injection device and analysis apparatus in accordance with the invention are particularly useful in the analysis of samples containing volatile materials.

A preferred embodiment of the invention will now be described with reference to the accompanying drawings, in which:-

Figure l is a schematic diagram of an injection device in accordance with the invention,

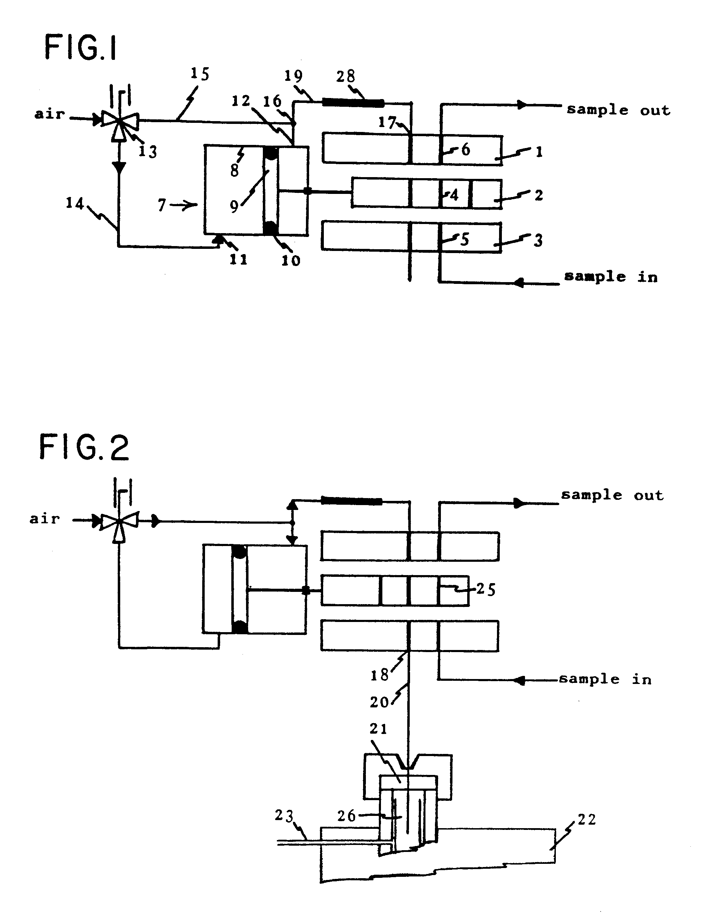

Figure 2 illustrates the device of Figure l, in injection mode, connected to a GC machine.

Referring to Figures l and 2, a sample injection device for gas chromatography comprises a slider valve having a top plate l, a slider 2, and a bottom plate 3. The top and bottom plates l and 3, and the slider 2 may be of generally conventional steel, PTFE or any other suitable material. The slider 2 includes a passageway 4 defining a sample space, for containing the sample to be injected. The device includes an inlet port 5 for the sample, on bottom plate 3, and an exhaust port 6, on top plate l. In a first position of the slider 2, illustrated in Figure l, the liquid sample material flows continuously through the inlet port 5, through the sample space 4, and is exhausted via exhaust port 6.

A pneumatic actuator 7 includes a pneumatic cylinder 8, and piston 9, incorporating an "0" ring seal l0. Cylinder 8 is provided with inlet ports li and l2 on opposite sides of piston 9.

A switching valve l3 is adapted to supply air under pressure alternately between conduit l4, and thence through inlet ll, and conduit l5, and thence through inlet l2. Other gases, such as nitrogen or helium may be used as alternatives to air. A tee piece l6 is included in conduit l5, and a conduit l9 leads from tee piece l6 to a further port l7 on top plate l of the device, via a restrictor 28.
Restrictor 28 is provided to ensure that the pressure applied to inlet l2 is sufficiently high to provide the minimum pressure required to move piston 9 and is not lowered excessively by venting through port l7. Thus, when pneumatic pressure is applied to inlet l2, pressure is simultaneously applied via conduit l9 to port l7.

Figure 2 illustrates the operation of the device when switching valve l3 is operated to apply pneumatic pressure to conduit l5. The pneumatic pressure applied to inlet l2 operates piston 9, to move slider 2 into its second position, in which the sample space 4 communicates with a port l7. Simultaneously, port l7 is pressurized, via conduit l9, to apply the air under pressure to sweep the sample space 4.

Connected to outlet port l8 is PTFE outlet conduit 20, which pierces a conventional septum 2l of a gas chromatography apparatus 22.

Gas chromatography apparatus 22 includes an inlet 23 for an inert carrier gas, at a pressure which is at least one bar, and preferably at least four bar, below the pressure applied to inlet l7. Thus, the sample space 4 is rapidly flushed, and the sample injected through septum 2l in a very short space of time. Pressure is generally applied to conduit l5 for a period not substantially greater than the length of time required to inject a sample manually, using a syringe, and preferably for a period of not longer than 3 seconds. At the end of this period, switching valve l3 is operated to switch the pneumatic pressure to conduit l4 and through inlet ll to return slider 2 to the position shown in Figure l.

During injection of the sample, a second passageway 25 is interposed between inlet port 5 and exhaust port 6, so that the flow of the liquid sample material through the sampling device is not interrupted.

The low thermal conductivity of PTFE conduit 20 ensures that a minimum conduction of heat takes place between injection zone 26 of gas chromatography device 22, to minimize loss of volatile materials, prior to the sample entering the sample introduction zone 26.

A particular advantage of the device illustrated is that no change to the routing of the carrier gas of the gas chromatography device is required, and a conventional air line at approximately five to six bar can be utilized both to operate the pneumatic valve, and to inject the sample. Furthermore, because the sample line may be maintained pressurized, samples containing large amounts of volatile components can be injected, without the loss of the volatile components to atmosphere.

The method and device in accordance with this invention have been found to be particularly advantageous in the continuous sampling of a cumene process line, containing about 20 weight percent of volatile C3-C4 hydrocarbons in benzene.

In particular, we have found that, when manual syringe techniques are used with such samples, the peaks due to low molecular weight materials, specifically propane, propylene, and isobutane, are substantially reduced as compared with the peaks obtained using the method in accordance with the invention, because of evaporation, in the time taken between aspiration of the sample into the syringe, and injection into the septum.

It will of course be readily appreciated that other embodiments of the apparatus in accordance with the invention than those specifically described above are possible, within the scope of the appended claims. For example instead of the slider valve described above, other forms of injection valve may be utilised, such as rotary valves or diaphragm valves. Although the use of a pneumatically operable valve member, driven by the same air supply as is used to inject the sample, is preferable, other methods can be used, for example a solenoid.

## Claims

1. An injection device for a fluid sample analysis apparatus, comprising:
means defining a sample space for containing fluid sample,
an inlet port for supplying a fluid sample to the sample space,
an outlet port for passing the sample from the sample space to the analysis apparatus,
a valve member having at least first and second positions such that in the first position the sample space communicates with the inlet port and is isolated from the outlet port, and in the second position the sample space communicates with the outlet port, part is isolated from the inlet port,
means for supplying a gas under pressure to the sample space in the second position of the valve to cause the said gas under pressure to enter the sample space to sweep the sample from the sample space to the outlet port, and means for preventing gas flow through the outlet port in the first position of the valve.

2. A device as claimed in Claim l, wherein the means defining the sample space comprises a slider having a passageway therein defining the sample space, wherein the slider is adapted to move between a first position, in which the passageway communicates with the inlet port, and a second position, in which the passageway communicates with the outlet port.

3. A device as claimed in Claim l or Claim 2, including a pneumatic chamber incorporating a pneumatically operable member connected to the valve member and including a control valve for supplying the said gas under pressure alternately to a first side of the pneumatically operable member, or simultaneously to a second side of the pneumatically operable member and the sample space.

4. A device as claimed in any one of the preceding claims, including an outlet conduit of low thermal conductivity connected to the outlet port, and adapted to pass the sample to the analysis apparatus.

5. Apparatus for analysing a fluid sample, which apparatus includes means defining a sample introduction zone and a sample analysis zone, means for introducing a flow of an inert carrier gas into the sample introduction zone to convey a sample from the sample introduction zone to the sample analysis zone, and an injection device as claimed in any one of the preceding claims, adapted to inject a sample into the sample introduction zone.

6. Apparatus for analysing a fluid sample, comprising means defining a sample introduction zone and a sample analysis zone, means for introducing a flow of an inert carrier gas into the sample introduction zone, to convey a sample from the sample introduction zone to the analysis zone, an injection device for injecting the sample into the sample introduction zone, the injection device including means defining a sample space, and means for causing the sample space to communicate with the sample introduction zone, whilst simultaneously causing the application to the sample space of a flow of gas, at a pressure substantially higher than that of the said carrier gas, characterised in that the inert carrier gas is introduced into the column independently of the injection device.

7. Apparatus as claimed in Claim 5 or Claim 6, including a gas chromatographic column for separating constituents of the sample.

8. Apparatus as claimed in any one of Claims 5 to 7, wherein the pressure of the gas supplied to the sample space is at least l bar in excess of the pressure of the carrier gas at the sample introduction zone.

9. Apparatus as claimed in Claim 8, wherein the pressure of the gas applied to the sample space is at least 4 bar in excess of the pressure of the carrier gas at the sample introduction zone.

l0. Apparatus as claimed in any one of Claims 5 to 9, including means for maintaining the sample under pressure whilst supplying it to the sample space.

ll. A method of supplying a fluid sample to an inlet port of sample analysis apparatus utilizing an inert carrier gas to convey the sample from a sample introduction zone to a sample analysis zone, which method comprises injecting the sample into the sample introduction zone, utilising a supply of an injection gas at a pressure substantially higher than that of the carrier gas, wherein the inert carrier gas is supplied to the sample introduction zone continuously and independently of the supply of the injection gas, during the injection process.

l2. A method as claimed in Claim ll, wherein the pressure difference is at least l bar.

l3. A method as claimed in Claim l2, wherein the pressure difference is at least 4 bar.

l4. A method as claimed in any one of Claims ll to l3, wherein the liquid sample comprises components which have high volatility at the temperature of operation of the injection device.

0225779

# FIG.1

# FIG.2